# EUROPEAN PATENT APPLICATION

(11) **EP 3 754 586 A1**
(43) Date of publication of application: **23.12.2020**
(21) Application number: 19753951.3
(22) Date of filing: 14.02.2019
(51) Int. Cl.: G06Q 50/04, G06Q 50/10, G06Q 10/06

(54) **CLOTHING PRODUCTION SYSTEM THAT ENABLES EASY PRODUCTION OF VARIOUS TYPES OF CLOTHING AND COMMUNICATION WITH DESIGNER ABOUT PRODUCTION PROCESS**

(30) Priority: 14.02.2018 KR 20180018760
(71) Applicant: Naramulsan Co., Ltd, Seoul 02558 (KR)
(72) Inventor: SHIN, Wang Su, Seoul 02598 (KR)
(74) Representative: Shearman, James Ward
(86) International application number: PCT/KR2019/001850
(87) International publication number: WO 2019/160370

(57) **Abstract**

The present invention relates to a clothing production system. More particularly, the present invention relates to a clothing production system and a method therefor, the clothing production system comprising: a content provider terminal; a designer terminal; a customer terminal or an administrator terminal; and an operation system, wherein the clothing production system is constructed to create a new market capable of content distribution, allow designers to download the content and produce various types of clothing based on the system, and enable communication with manufacturers or customers so as to allow production of the respective clothing accurately.

## Description

### [TECHNICAL FIELD]

The present invention relates to a clothing production system. More particularly, the present invention relates to a clothing production system and a method therefor, in which the clothing production system is constructed to create a new market capable of distributing contents, allow designers to download the contents and produce various types of clothing based on the system, and enable communication with manufacturers or vendors so as to allow production of the respective clothing accurately.

### [BACKGROUND ART]

In general, various companies such as design companies, fabric companies, dyeing companies and label companies are complicatedly associated in the clothing industry, and most works are manually carried out. In particular, many companies are associated with each other as partners in the process of producing the clothing, so it takes a lot of time when producing the products and, when a defect occurs by one of subcontractors, it may be difficult to find the responsibility for the defect because the responsibility for the defect is unclear.

Therefore, a designer has to visit a manufacturer from time to time to check whether the fabric, dyeing, or finish work has been performed as required by the designer to secure the desired quality. In some cases, it takes a lot of time when the design is modified.

For this reason, the conventional clothing industry has no choice but to proceed with a large-scale production of small items, so there was a limitation that it is difficult to produce a small quantity of various items in accordance with the market demand.

As the internet technology has developed recently, a system that connects sellers and purchasers through online shopping malls has emerged, making it possible to produce a small quantity of various items.

However, the system also adopts the clothing production method similar to the conventional one. In this regard, a method using ERP systems and CAD/CAM systems is introduced to make it possible to easily produce various types of clothing online.

The above method, however, represents a limitation because the number of designs created by one designer is limited, and the limitation becomes severe because some types of contents overlap with those already created by other designers.

Moreover, since such work is processed online, the designer cannot check the fabric or dyeing of the clothing, so there is a high probability of defects, and it is impossible to find who is faulty.

### [DETAILED DESCRIPTION OF THE INVENTION]

### [TECHNICAL PROBLEM]

Accordingly, the present invention has been made to allow designers to easily produce various types of clothing online while overcoming the limitations, and enable communication with manufacturers or vendors so as to allow production of the specific clothing as required by the designers while minimizing the defects.

### [TECHNICAL SOLUTION]

To this end, the present invention provides a clothing production system including:
a content provider terminal for registering contents created by a content provider when authority of the content provider is granted after subscription;
a designer terminal for creating specific clothing by calling the contents registered by the content provider when authority of a designer to produce the clothing is granted after subscription;
a vendor terminal or an administrator terminal for receiving an order from the designer or a purchaser and reporting a result of a production process based on a work log generated during clothing production; and
an operating system configured to register the contents uploaded through content providers, create markets which can be selected by each designer when the contents are displayed on each designer terminal, and receive a report for a result of each clothing production procedure through the vendor terminal or administrator terminal when producing the clothing created by the designer to allow the designer to communicate with a vendor or a manufacturer.

### [ADVANTAGEOUS EFFECTS OF THE INVENTION]

According to the present invention, the content providers can earn profits with their own contents in the market without being affected by the manufactures.

Each designer can not only design various types of clothing using various contents posted by the content providers, but also produce desired clothing products while communicating with manufacturers or vendors about clothing designed by the designer.

Purchasers can easily purchase clothing that may represent individuality of the purchasers from among the clothing produced by each designer.

### [DESCRIPTION OF THE DRAWINGS]

FIG. 1 is a block diagram showing the overall configuration of a system according to an embodiment of the present invention.
FIG. 2 is a block diagram showing the configuration of an operating system of FIG. 1.
FIGS. 3 to 3b are screen configurations of an operating system according to an embodiment of the present invention.
FIGS. 4 to 4c are flowcharts showing the operation of a system according to an embodiment of the present invention.

### [BEST MODE]

According to the best mode for implementing the present invention, there is provided a clothing production system including:
a content provider terminal 10 for registering contents created by a content provider when authority of the content provider is granted after subscription;
a designer terminal 20 for creating specific clothing by calling the contents registered by the content provider when authority of a designer to produce the clothing is granted after subscription;
a vendor terminal 40 or an administrator terminal 30 for receiving an order from the designer terminal or a vendor terminal and reporting a result of a production process based on a work log generated during clothing production;
a shop terminal 50 for selling clothing of the designer produced through the vendor terminal 40; and
an operating system 60 for establishing a network with the content provider terminal 10, the designer terminal 20, the vendor terminal 40, the administrator terminal 30, or the shop terminal 50,
wherein each content provider terminal easily registers own contents, each designer terminal easily designs various types of clothing using various registered contents, a manufacturer or the vendor terminal accurately produces the clothing while communicating with the designer, and the clothing produced by each designer are allowed to be sold through an internet shopping mall so that an integrated market is established.

### [MODE FOR INVENTION]

Hereinafter, embodiments for carrying out the present invention will be described in detail with reference to the accompanying drawings.

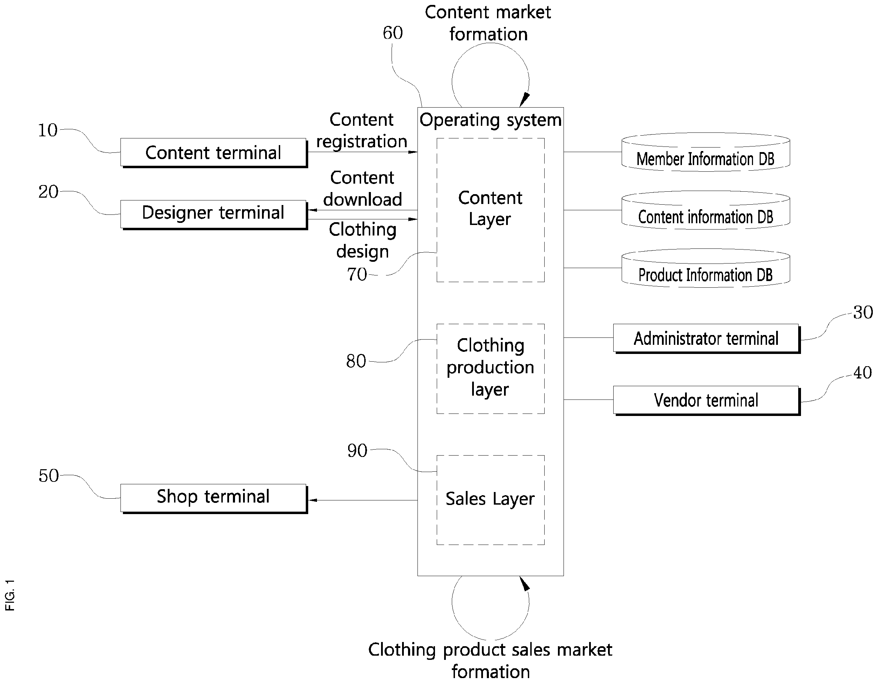

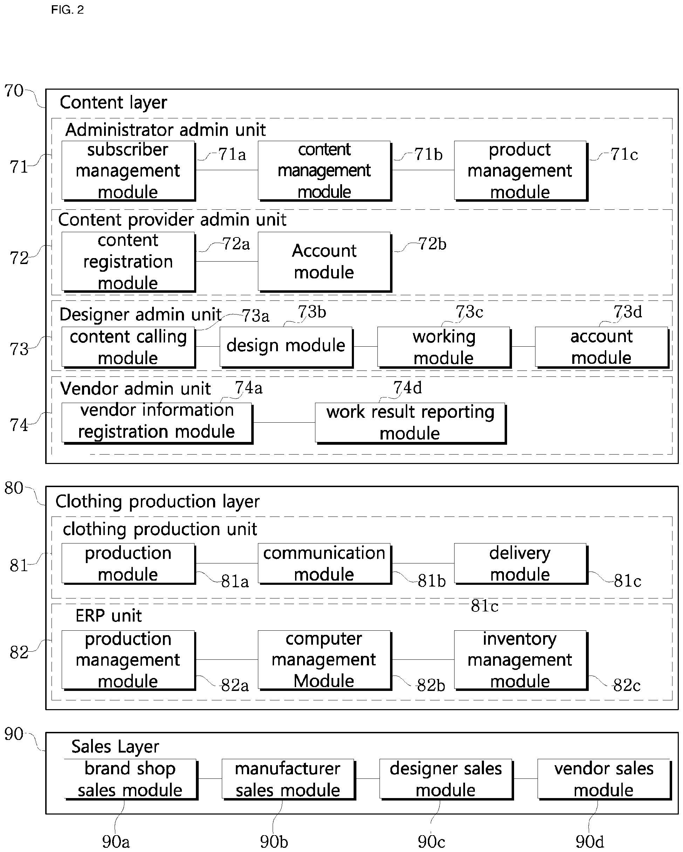

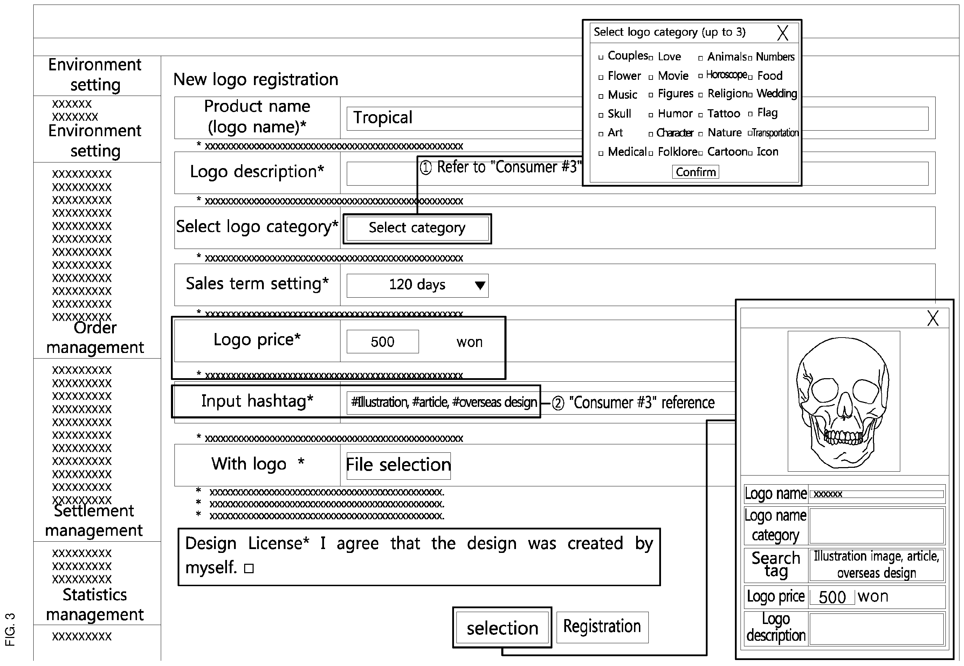

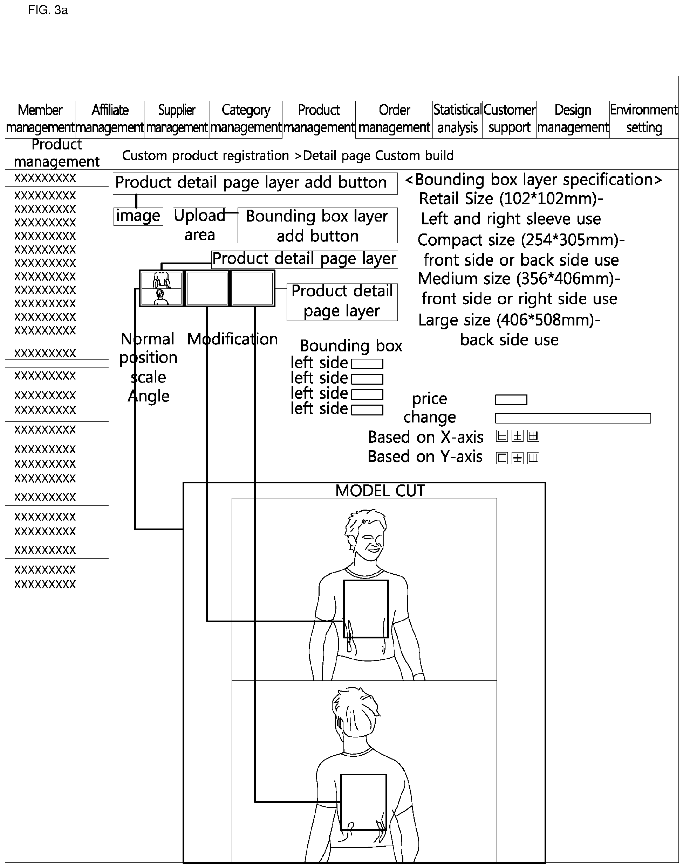

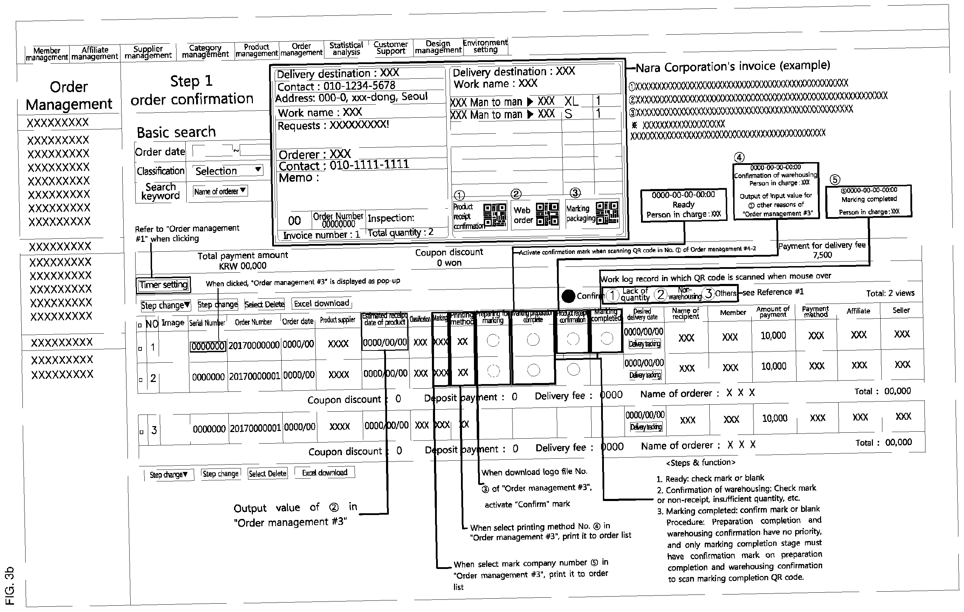

FIG. 1 is a block diagram showing the overall configuration of a system according to an embodiment of the present invention, FIG. 2 is a block diagram showing the configuration of an operating system of FIG. 1, and FIGS. 3 to 3b are screen configurations of the operating system according to an embodiment of the present invention.

Referring to the drawings, the present invention is a system established to create a market where contents are distributed, and based on the market, each designer may download various contents and easily produce clothing.

The designer may check whether each clothing of the designer can be accurately produced online while communicating with the manufacturer or vendor.

The present invention may include a content provider terminal 10 for registering contents created by a content provider when authority of the content provider is granted after subscription is made by accessing an operating system 60;
a designer terminal 20 for creating specific clothing by calling the contents registered by the content provider when authority of a designer to produce the clothing is granted after subscription is made by accessing the operating system;
a vendor terminal 40 or an administrator terminal 30 for reporting a production process of the clothing created by the designer when authority as a vendor is granted after subscription is made by accessing the operating system; and
an operating system 60 configured to register the contents uploaded through content providers, and create markets which can be selected by each designer.

When the clothing created by the designer are produced, a report for each clothing production procedure is made through the vendor terminal or administrator terminal to allow the designer to accurately produce the clothing while communicating with a vendor or a manufacturer.

In this case, the operating system 60 is for producing the clothing and distributing the contents, and may be divided into a content layer 70 for distributing the contents and a clothing production layer 80 for producing designed clothing.

Depending on embodiments, an Internet shopping mall may be operated and a sale layer 90 for selling the clothing created by each designer may be provided.
For reference, each layer will be described later with reference to FIGS. 2 to 4.

In addition, the operating system 60 may include a member information DB 61 that stores identification information of registered designers, content providers, or vendors, a content information DB 62 that stores the contents registered by each content provider, and a product information DB 63 that stores information on clothing products created by each designer using the contents.

In this case, the member information DB 61 may store basic information corresponding to a name, an address, an ID, a password, contact information, etc. of the content provider for registering the contents, bank account information corresponding to a name of a bank, an account holder, an account number, a copy of a bankbook, etc. for processing the profits earned when the contents of the designer are used, and career information for the grade or level of the content provider. The content provider may be an individual, but may be a group, and in the case of a group, a company name, a business registration number, a business type, a business field, a name of representative, a name of person in charge, a business license, etc. may be stored as a database.

In addition, the content information DB 62 may be a database that stores characters, letters, logos, and items registered by the content providers for each category, and may include a name of a content provider, a name of a registered content, a description of a content, categories (couples, love, animals, numbers, flowers, movies, food, music, figures, etc.) for classification of contents, basic information on images, a sale price charged each time the designer uses the content, and contract information such as a contract term during which the contents are exposed to the market or a license status.

Further, the product information DB 63 may be a database that stores information on clothing products created by each designer using the registered contents and may include a name of a designer, a name of a clothing product produced by the designer, a material, a color and a size of the clothing product, categories for classification, basic information on images of products, costs incurred when the designer produces the clothing products, a quantity of produced clothing products, or account information for the price and profit or loss when the clothing products are sold.

In addition, the content provider terminal 10 (hereinafter referred to as a provider terminal or content terminal) may be a terminal for registering own content or licensed content of another person by accessing the operating system based on the granted authority, and may check and manage the content registration, content correction, new content registration, confirmation of full list, environment/profile management, community management, bulletin board management, and settlement status. Representatively, the content provider terminal 10 may be any one of a personal computer, a notebook computer, a slate PC, a tablet PC, and an ultrabook, and according to an embodiment, the content provider terminal 10 may be any one of a smart phone, a portable terminal, a mobile terminal, a personal digital assistant (PDA), and a portable multimedia player (PMP) terminal.

In addition, the designer terminal 20 may be a terminal for designing a clothing product using the contents registered by the content provider by accessing the operating system based on the granted authority. The designer terminal 20 may be any one of a personal computer, a notebook computer, a slate PC, a tablet PC, and an ultrabook, and according to an embodiment, the designer terminal 20 may be any one of a smart phone, a portable terminal, a mobile terminal, a personal digital assistant (PDA), and a portable multimedia player (PMP) terminal.

Further, the administrator terminal 30 may be a terminal for managing the contents registered by the content provider, the clothing product designed by the designer or the clothing produced by the designer by accessing the operating system based on the granted authority and may perform environment setting, fee policy, settlement management, content management, content provider management, clothing product management, designer management, sale management, inventory management, price policy management, and content sale ranking management. Representatively, the administrator terminal 30 may be any one of a personal computer, a notebook computer, a slate PC, a tablet PC, and an ultrabook, and according to an embodiment, the administrator terminal 30 may be any one of a smart phone, a portable terminal, a mobile terminal, a personal digital assistant (PDA), and a portable multimedia player (PMP) terminal.

In addition, the vendor terminal 40 may be a terminal used by a company engaged in the clothing industry, which registers a business type of a vendor based on the granted authority by accessing the operating system, and reports the result of the work to the designer when selected by the designer. Representatively, the vendor terminal 40 may be any one of a personal computer, a notebook computer, a slate PC, a tablet PC, and an ultrabook, and according to an embodiment, the vendor terminal 40 may be any one of a smart phone, a portable terminal, a mobile terminal, a personal digital assistant (PDA), and a portable multimedia player (PMP) terminal.

Further, the shop terminal 50 may be a terminal installed in a shopping mall for managing the produced clothing through the operating system when the operating system operates the shopping mall through the Internet. Representatively, the shop terminal 50 may be any one of a personal computer, a notebook computer, a slate PC, a tablet PC, and an ultrabook, and according to an embodiment, the shop terminal 50 may be any one of a smart phone, a portable terminal, a mobile terminal, a personal digital assistant (PDA), and a portable multimedia player (PMP) terminal.

For reference, although the content provider terminal 10 is for registering the contents, according to an embodiment, the content provider terminal 10 may be a designer terminal 20 for designing clothing, an administrator terminal 30 for managing own contents or clothing products, or a shop terminal 50 for selling the produced clothing. In addition, although the designer terminal 20 is for designing the clothing, according to an embodiment, the designer terminal 20 may be an administrator terminal 30 for managing contents or clothing products, or a shop terminal 50 for selling produced clothing. Further, although the administrator terminal 30 is for managing contents or clothing products, according to an embodiment, the administrator terminal 30 may be a shop terminal 50 for selling produced clothing.

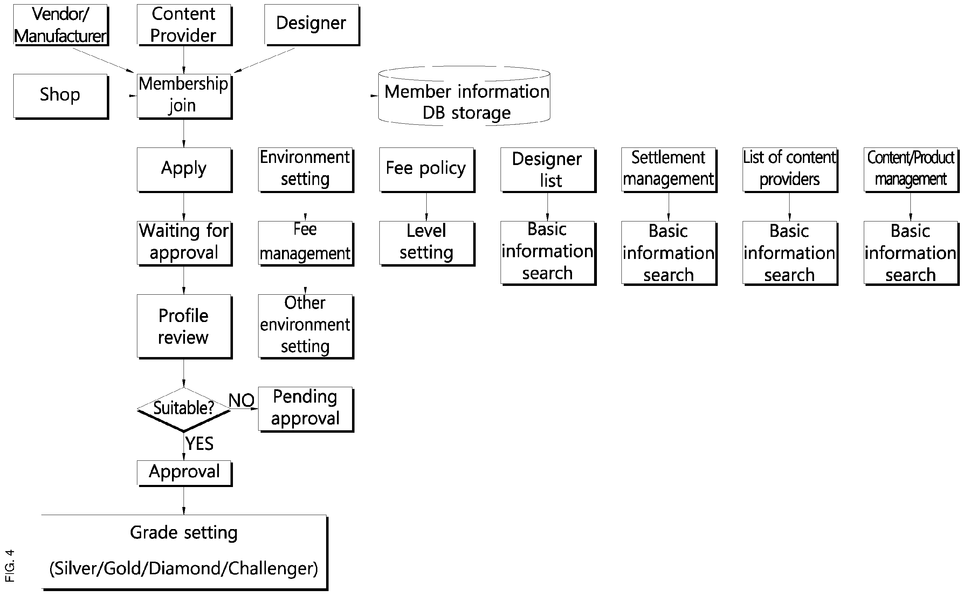

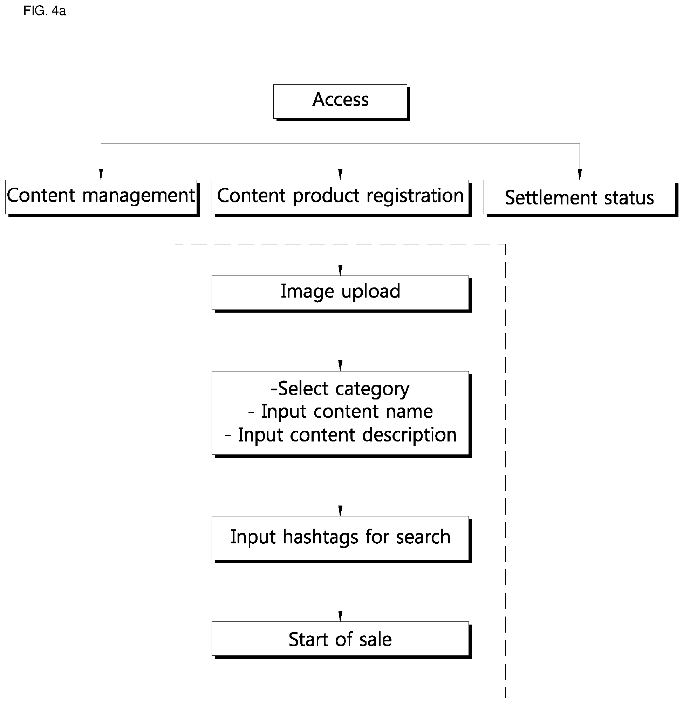

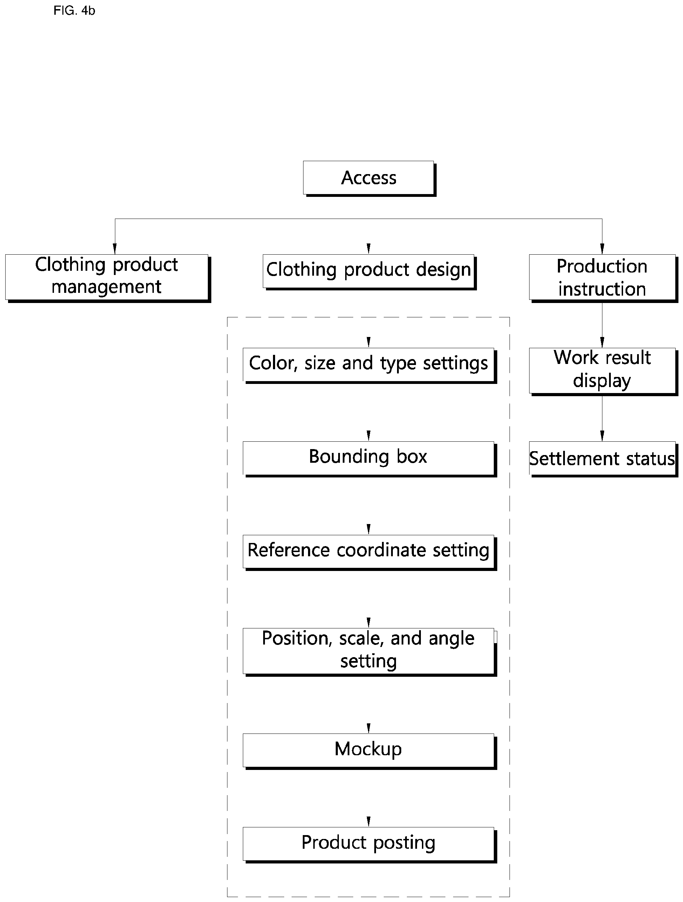

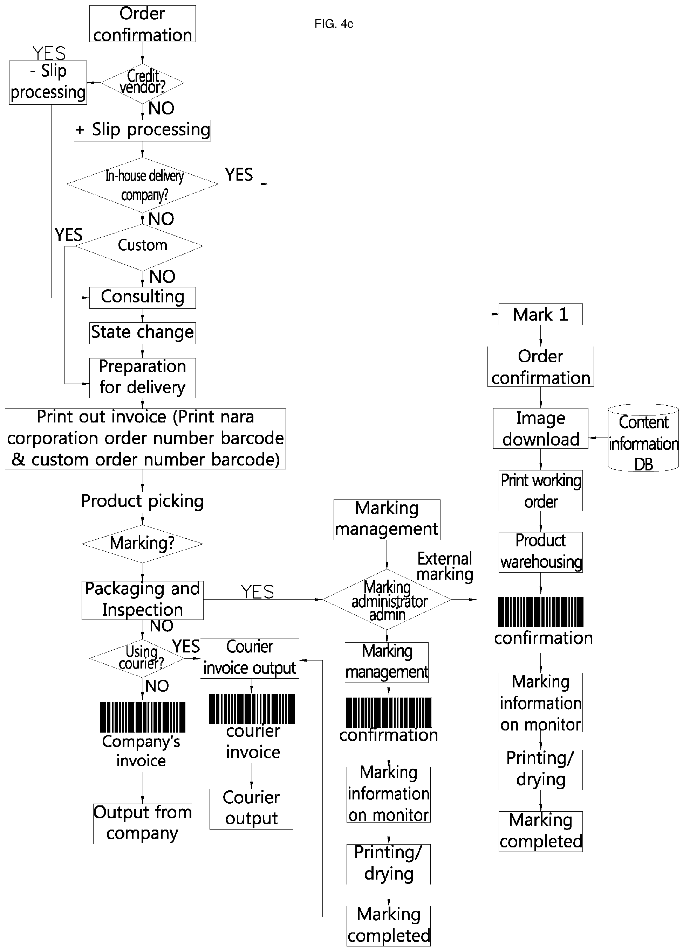

For reference, FIG. 2 is a view showing the configuration of a content layer in an operating system of FIG. 1, FIG. 3 is view showing the configuration of a clothing production layer in the operating system, and FIG. 4 is a view showing the configuration of a sale layer in the operating system.

Referring to the above drawings, the operating system 60 may be divided into a content layer 70 for registering and distributing the contents, and a clothing production layer 80 for producing and managing the clothing created by the designer.

According to an embodiment, a sale layer 90 for selling the clothing produced by each designer through the Internet may be provided.

In this case, the content layer 70 may include an administrator admin unit 71, a content provider admin unit 72, a designer admin unit 73, and a vendor admin unit 74,
The administrator admin unit 71 of the content layer 70 may be used for managing the contents registered by the content provider and the clothing products created by the designer based on the granted authority, and may include a subscriber management module 71a, a category management module 71b, and a product management module 71c.

The subscriber management module 71a may be used for managing information of a designer, a content provider or a vendor connected to a server of the operating system, and in particular, the subscriber management module 71a may include items for confirming the sale amount of the contents or clothing products sold by each content provider or designer and a fee policy for setting the level of each content provider or designer as well as management fees, sale fees, or deposit rates according to the level.

In addition, the category management module 71b may be a module for correcting and managing category affiliation, etc. by accessing the member information DB, the content information DB, or the product information DB. According to an embodiment, the category management module 71b may check and manage the ranking of the contents or clothing products sold for each category.

Further, the product management module 71c may be a module for managing the contents registered by the content provider and the clothing products, and may include a full list of the contents for checking registered contents, a display management item for determining a method of displaying the contents, a full list of products for checking clothing products designed by the designer, and price policy and ranking management items to check and manage the price policy or rankings of the clothing products or contents.

In addition, the content provider admin unit 72 of the content layer 70 may be used for registering the contents created by the content provider based on the authority granted to the content provider and managing the contents registered by the content provider, and may include a content registration module 72a and an account module 72b.

As shown in FIG. 3, the content registration module 72a may be used for registering the contents created by the content provider so that designers can use the contents and may include a name of contents, a description of contents, and a category for classification as well as a sale term, a price, content images and a license status.

In addition, the account module 72b may be used for registering the contents and for checking and managing the content sale money settled according to the quantity of the produced clothing products when a designer creates clothing products using the contents of the content provider. The account module 72b may include information about a name of a designer, a sale date, a payment amount, a payment method, an affiliate store, etc.

Further, the designer admin unit 73 of the content layer 70 may be used for supporting the designer to design and manage the specific clothing products of the designer based on the granted authority through the operating system, and may include a content calling module 73a, a design module 73b, a working module 73c, and an account module 73d.

In this case, the content calling module 73a may be a module that enables designers to select the contents registered by the content provider when the contents are called and displayed for each category. According to an embodiment, it is possible to check an image and a price for the contents as well as a name or a description of the contents or a person who provides the contents.

In addition, the design module 73b may be a module for allowing a designer to design a clothing product by using specific contents. When the color, type, and size of the clothing product are set as shown in FIG. 3a, a bounding box to which the content image is applied is added. In this case, after setting the reference coordinates of an X-axis and a Y-axis of the bounding box, the position, scale, angle, etc. are designated and a mock-up is created.

In addition, the working module 73c may be a module used for selecting a specific vendor or manufacturer when a designer instructs to produce a clothing product created by the designer, and receiving a report of work details from the selected vendor or manufacturer. In this case, the working module may receive a report from the vendor about an order number, a vendor, a receipt date of clothing product/fabric, a method of forming the corresponding contents on the clothing (e.g., printing, transfer, embroidery, etc.), and a work result (e.g., preparation for marking, completion of marking preparation, completion of warehousing, completion of marking, etc.).

In this case, as shown in FIG. 3b, each work process (e.g., preparation for marking, completion of marking preparation, completion of warehousing, completion of marking, etc.) is displayed on a table consisting of boxes and blanks, and when the work is in progress, the boxes and blanks corresponding to the work are activated while displaying a confirmation mark by receiving a report from the vendor. When the work is not in progress, the boxes and blanks may remain in an empty state. For reference, in the marking preparation stage, the boxes and blanks may be automatically activated while displaying the confirmation mark when a vendor or manufacturer downloads the contents. In the marking preparation completion stage, the confirmation mark may be displayed when it is reported by whom and when the marking is completed. In addition, the confirmation mark may also be displayed in the warehousing completion stage and the marking completion stage when it is reported by whom and when the warehousing is completed from among employees of the vendor company. In this case, it is possible to check the work log record (when and who did the work) taken with the QR code by overlaying a cursor of a mouse on the confirmation mark.

Further, the account module 73d may be used for checking and managing the amount of money settled according to the quantity of the produced clothing products and the amount of money paid due to the use of the contents when the designer produces the clothing products by using the contents. The account module may be configured to include account information and accountant information such as a name of a designer, a name of a content provider, a production date, a payment amount, purchase money, payment method, etc.

In addition, the vendor admin unit 74 of the content layer 70 may be used for registering information of the vendor based on the granted authority and for leaving a record of the work when the work is performed by receiving an order from a specific designer. The vendor admin unit 74 may include a vendor information registration module 74a and a work result report module 74b.

In this case, the vendor information registration module 74a may be used for registering business type information of the vendor or manufacturer so that each designer can select the vendor or manufacturer based on the business type information, and the vendor information registration module 74a may include a vendor name, an address, a business type, and a business field.

In addition, the work result reporting module 74b may be used for allowing a vendor or manufacturer to check the work record when the vendor or manufacturer performs a work by receiving an order from a designer, and may include a name of a worker, a work time, and work details that have been done.

Further, the clothing production layer 80 may be an area in which a manufacturer or vendor receives an order from a designer in the overall operating system 60 to produce and manage the clothing. In particular, the clothing production layer 80 may be divided into a clothing production unit 81 and an enterprise resource planning unit (hereinafter referred to as an ERP unit) 82.

For reference, the clothing production unit 81 may include a CAD/CAM, a picking tool, and a printing machine to produce a specific clothing product by receiving an order from a designer, and may consist of a production module 81a, a communication module 81b, and a delivery module 81c.

In this case, the production module 81a may check whether the shop is a membership shop after the payment is completed or when a production order is received from the designer through a warranty insurance, and then pick the corresponding product from the picking list. In addition, when the administrator checks the order of the designer and downloads the related contents, the work record is left and the downloaded content image is formed on the clothing stored in the warehouse, thereby completing the marking.

In addition, the communication module 81b may be a module that supports to check the work results displayed through the report module of the vendor admin unit or the working module of the designer admin unit based on the logo record of an operator left through the production module. According to an embodiment, the results of the work done by the worker/vendor may be reported to the designer, or the instruction of the designer may be delivered to the worker/vendor.

Further, the delivery module 81c may be used for issuing an invoice including an address or a name of a recipient who will receive the produced clothing in order to deliver the produced clothing to a designated person or company.

The ERP unit 82 of the clothing production layer 80 may be used for collectively managing the management activities such as production, logistics, finance, accounting, sale and purchase, and inventory within a company. For this purpose, the ERP unit 82 may include a settlement management module 82a, an inventory management module 82b, and a production management module 82c.

For reference, the production management module 82a may be used for managing the fabric inventory and subsidiary materials, and may make it possible to easily grasp the required quantity and accumulated quantity of textile fabrics, and the quantity of dyes and materials, thereby enabling the comprehensive tracking management based on the usage history and appropriate inventory maintenance while ensuring the competitiveness by reducing unnecessary expenditures.

In addition, the settlement management module 82b may be a module that receives invoice information at the time of delivery through the delivery module, generate inventory change information of outgoing products based on a sale slip, a purchase slip, a deposit slip, a payment slip, a fee management, and a report statistics, and transfers the inventory change information to an inventory management module.

In addition, the inventory management module 82c may receive the inventory change information of the outgoing products through the settlement management module for performing an inventory status list management, a storage management, a delivery management, a storage/delivery management, a movement management, and a return management based on products stored in a logistics center and a warehouse and the inventory change information of the outgoing products.

Further, the sale layer 90 may be used for selling the clothing products created or produced to general purchasers through the Internet, and may include a brand shop sale module 90a for allowing the ship to sell and manage the clothing products created by using the registered contents, a manufacturer sale module 90b for allowing the manufacturer who operates the operating system to sell and manage the clothing created by using the registered contents, a designer sale module 90c for selling and managing the clothing products created by the designer through the Internet, and a vendor sale module 90d for allowing the vendor to sell and manage the clothing created by using the contents.

Accordingly, the present invention can establish a new market in which designers can create profits by using contents registered by the content providers. In particular, the designers can easily produce many types of clothing using various contents, and can produce the clothing products while communicating online with the manufacturers or vendors about the clothing designed by the designers.

FIGS. 4 to 4c are flowcharts showing an operation procedure of a system according to an embodiment of the present invention,
Referring to FIGS. 4 to 4c, each of the content provider, designer, vendor, and shop accesses the operating system, inputs their identification information, and applies for membership registration to have an admin.

In this case, as shown in FIG. 4, the administrator terminal checks the list of the applied content providers, designers, or vendors, reviews the profiles of them, determines whether they are suitable, and assigns the admin having the authority to access the operating system.

In addition, the administrator terminal sets the level (silver/gold/diamond/challenger) of the designer or content provider to which the admin is assigned based on the profile of each designer or content provider, and sets the management fees and official fees according to the level based on the fee policy.

When a content provider having the access authority accesses the operating system and starts the content registration, as shown in FIG. 4a, an image of the content such as a character, logo, or letter created by the content provider is uploaded, the category (couples, love, animals, numbers, flowers, movies, food, figures, religions etc.) for classification of the contents is selected and a name and a description for the contents are inputted. In addition, the content registration is completed by inputting a hashtag for search, and sale is started so that the contents can be used by multiple designers.

In addition, when the designer accesses the operating system to start the design work for the clothing products, as shown in FIG. 4b, a color, a size (S, M, L, XL) and a type (cotton T-shirt, hood T-shirt, man-to-man T-shirt, etc.) of the clothing are set. As the contents are called, the contents provided by the content provider for sale are displayed.

In this case, one of the above contents is selected, and a bounding box to be marked on the clothing is designated based on the contents.

In addition, reference coordinates for the bounding box are set to determine the position of the contents formed on a specific area, such as a front surface, a rear surface, or an arm, of the clothing, and based on the reference coordinates, the location (position) of the contents, the size of the contents, and the inclination of the contents are set and a mock-up is made, thereby completing the product design for the clothing.

In addition, when the designer designates a manufacturer (for example, an applicant) or a specific registered vendor for the clothing product created by the designer, and instructs the working order, the vendor or the manufacturer produces the clothing of the designer and the designer can check by whom, when and what kind of work has been done based on the log file that is left during the production of the clothing or can send or receive a comment to or from the vendor or the manufacturer.

Further, when the clothing production is completed, it is possible to check and manage the cost used for producing the clothing, the sale cost, or the cost paid for the copyright fee through the settlement status.
For reference, after the designer completes the design, if the clothing product is applied for sale, the administrator terminal checks the products requested for sale by the provider through the product management module, rejects defected products, and approves the sale of the products if there are no defects in the products, so that the products can be sold through the Internet.

For reference, when a vendor or manufacturer receives an order from a designer or a general purchaser sees the clothing created by the designer and applies for purchase, as shown in FIG. 4c, the vendor terminal or the administrator terminal that accesses the operating system checks the order,
picks the relevant clothing product, and checks whether there is a marking in the clothing product. If there is a marking in the clothing product, a marking major (administrator) accesses the product information DB to check the marking information by loading information on the logo information to be printed on the product, printing position, and printing size based on the granted admin, and then the printing/drying work is performed to complete the marking.

In addition, each administrator or worker creates a work log to record by whom, when, and what kind of work has been done, and the operating system communicates with the designer based on the work log so that the designer can check the work result.

In this case, the administrator terminal prints out the delivery note and instructs the delivery, and the processes related to the production, logistics, finance, accounting, sale and purchase, and inventory can be collectively managed in association with each other through the ERP module based on the delivery number.

Accordingly, the present invention can establish a new market in which designers can create profits by using contents registered by the content providers.

In particular, the designers can easily produce many types of clothing using various contents of the content provider, and can produce the clothing products while communicating online with the manufacturers or vendors about the clothing designed by the designers.

## Claims

1. A clothing production system comprising:
a content provider terminal (10) for registering contents created by a content provider when authority of the content provider is granted after subscription;
a designer terminal (20) for creating specific clothing by calling the contents registered by the content provider when authority of a designer to produce the clothing is granted after subscription;
a vendor terminal (40) or an administrator terminal (30) for receiving an order from the designer terminal or a vendor terminal and reporting a result of a production process based on a work log generated during clothing production;
a shop terminal (50) for selling clothing of the designer produced through the vendor terminal (40); and
an operating system (60) for establishing a network with the content provider terminal (10), the designer terminal (20), the vendor terminal (40), the administrator terminal (30), or the shop terminal (50),
wherein each content provider terminal easily registers own contents, each designer terminal easily designs various types of clothing using various registered contents, a manufacturer or the vendor terminal accurately produces the clothing while communicating with the designer, and the clothing produced by each designer are allowed to be sold through an internet shopping mall so that an integrated market is established.

2. The clothing production system of claim 1, wherein the operating system (60) includes:
a content layer (70) for distributing the contents;
a clothing production layer (80) for producing designed clothing; and
a sale layer (90) for selling created clothing, and
wherein the content layer (70) includes:
an administrator admin unit (71) for managing contents registered by the content provider and clothing products created by the designer based on the granted authority;
a content provider admin unit (72) for allowing the content provider to register and manage the contents created by the content provider based on the granted authority;
a designer admin unit (73) for supporting the designer to design and manage own clothing products based on the authority granted through the operating system; and
a vendor admin unit (74) for registering vendor information and keeping and managing records based on the granted authority when a work is performed by receiving an order from specific designers or purchasers.

3. The clothing production system of claim 2, wherein the administrator admin unit (71) of the content layer (70) includes:
a subscriber management module (71a) for managing information of connected designers or content providers or vendors and including items for checking a sale amount of the contents or clothing products sold by each content provider or designer and a fee policy to set a level of each content provider or designer, and management fees, sale fees, or deposit rates according to the level;
a category management module (71b) that accesses a member information DB, a content information DB or a product information DB to correct and manage a category affiliation, and to check and manage rankings of the contents or clothing products sold for each category; and
a product management module (71c) including a full list of contents for checking registered contents, display management items for deciding a method of displaying the contents, a full list of products for checking the clothing products designed by designers, and price policy and ranking management items for checking and managing a price policy or a ranking of clothing products or contents.

4. The clothing production system of claim 2, wherein the content provider admin unit (72) of the content layer (70) includes:
a content registration module (72a) for registering the contents created by the content provider in the operating system to allow the designers to use the contents, and including a name and a description for the contents, a category for classifying the contents, a sale period, a price, and images; and
an account module (72b) for checking and managing a content sale money settled according to a quantity of produced clothing products when the designer produces the clothing produces by using the contents of the designer, and including information about a name of the designer, a sale date, a payment amount, and a payment method.

5. The clothing production system of claim 2, wherein the designer admin unit (73) of the content layer (70) includes:
a content calling module (73a) for checking an image and a price of the contents to support the designer to select the contents when the contents registered by the content provider are called for each category and displayed through the designer terminal;
a design module (73b) for creating a clothing product by setting a color, a type, and a size of the clothing product, designating a bounding box to which the called content image is applied, and designating a position, a size, and an angle of the contents based on preset reference coordinates;
a working module (73c) for selecting a specific vendor or a specific manufacturer when there is an order for producing the clothing product created by the designer, and receiving a report about working progress from the selected vendor or manufacturer; and
an account module (73d) for checking and managing an amount of money paid according to a quantity of the produced clothing products and an amount of money paid for using the contents when the designer produces the clothing products using the contents.

6. The clothing production system of claim 2, wherein the vendor admin unit (74) of the content layer (70) includes:
a vendor information registration module (74a) for registering business type information of a vendor or manufacturer so that each designer selects the vendor or manufacturer based on the business type information; and
a work result reporting module (74b) that records a work result including a name of a worker, a work time, and work details that have been done when working by receiving orders from the designers or purchasers.

7. The clothing production system of claim 2, wherein the clothing production layer (80) includes:
a clothing production unit (81) including CAD/CAM, picking tools and printing machines for producing specific clothing products by receiving orders from the designers; and
an ERP unit (82) for collectively managing a production logistics financial accounting sale and purchasing inventory management activity processes in association with each other.

8. The clothing production system of claim 7, wherein the clothing production unit (81) of the clothing production layer (80) includes:
a production module (81a) for downloading related contents and marking the related contents while leaving work records with respect to the clothing products identified through a picking list after payment is completed or when an order is received from the designer through a warranty insurance;
a communication module (81b) that supports to check the work result displayed through a reporting module of the vendor admin unit or a working module of the designer admin unit based on a logo record of a worker left through the production module; and
a delivery module (81c) for issuing an invoice including an address or a name of a recipient who receives the produced clothing.

9. The clothing production system of claim 8, wherein the communication module (81b) is configured to report the work result of the worker or a vendor to the designer, or to transmit instructions of the designer to the worker or the vendor.

10. The clothing production system of claim 7, wherein the ERP unit (82) of the clothing production layer (80) includes:
a production management module (82a) for enabling a comprehensive tracking management according to a usage history and maintaining an appropriate inventory based on the comprehensive tracking management by easily grasping a required quantity and an accumulated quantity of textile fabric and a quantity of dyes and materials, and securing competitiveness by reducing unnecessary expenditures;
a settlement management module (82b) that receives invoice information at the time of delivery through the delivery module, generates inventory change information of outgoing products based on a sale slip, a purchase slip, a deposit slip, a payment slip, a fee management, and a report statistics, and transfers the inventory change information to an inventory management module; and
the inventory management module (82c) that receives the inventory change information of the outgoing products through the settlement management module for performing an inventory status list management, a storage management, a delivery management, a storage/delivery management, a movement management, and a return management based on products stored in a logistics center and a warehouse and the inventory change information of the outgoing products.

11. The clothing production system of claim 1, wherein the content provider terminal (10) includes the designer terminal (20) for designing the clothing, the administrator terminal (30) for managing the contents or clothing products of a company, or the shop terminal (50) for selling produced clothing.

12. The clothing production system of claim 1, wherein the designer terminal (20) includes the administrator terminal (30) for managing the contents or clothing products, or the shop terminal (50) for selling produced clothing.

13. The clothing production system of claim 1, wherein the administrator terminal (30) includes the shop terminal (50) for selling produced clothing.

14. A clothing production system,
wherein a content provider terminal, a designer terminal, a vendor terminal, and a shop terminal respectively access an operating system to input identification information thereof;
an administrator terminal checks a list of applied content providers, designers or vendors, reviews profiles of the applied content providers, designers or vendors, determines suitability of the applied content providers, designers or vendors, and assigns an admin having authority to access the operating system;
the administrator terminal sets a level of the designer or content provider to which the admin is assigned based on the profile of each designer or content provider, and sets a management fee and a sale fee according to each level and grade based on a fee policy;
the content provider terminal having the authority uploads an image to be registered in a new logo registration window, selects a category, inputs a product name of a logo and a logo description, and inputs a hashtag for search by accessing the operating system, thereby completing content registration;
the administrator terminal checks each content registered by the content provider terminal and provides the contents in a market to allow designers to purchase corresponding contents;
each designer terminal accesses the operating system to set a color, a size, and a type of a specific clothing product;
each designer terminal designates a bounding box to which a content image is applied for the corresponding clothing, sets a reference coordinate of the corresponding bounding box, designates a position, a scale, and an angle based on the reference coordinate, and makes a mock-up;
each designer terminal designates a manufacturer or vendor for the created clothing product and gives a work order, so that the vendor or the manufacturer produces the clothing of the corresponding designer while checking who performs a work, when the work starts, and what kind of work is performed based on a log file left when the clothing are produced based on a product image prepared as the mock-up; and
each designer terminal applies for sale of the corresponding clothing product after production or the mock-up is completed, and the administrator terminal checks the product that the designer has applied for sale through a product management module, and starts the sale through an Internet, and
wherein each content provider terminal easily registers own contents, each designer terminal easily designs various types of clothing using various registered contents, a manufacturer or the vendor terminal accurately produces the clothing while communicating with the designer, and the clothing produced by each designer are allowed to be sold through an internet shopping mall so that an integrated market is established.
